# EUROPEAN PATENT APPLICATION

(11) **EP 3 075 425 A1**
(43) Date of publication of application: **05.10.2016**
(21) Application number: 15161910.3
(22) Date of filing: 31.03.2015
(51) Int. Cl.: A63F 13/245, A63F 13/65

(54) **TAG READER AND SYSTEM COMPRISING A TAG READER**

(71) Applicant: LEGO A/S, 7190 Billund (DK); NXP B.V., 5656 AG Eindhoven (NL)
(72) Inventor: Pedersen, Bjarke, 7100 Vejle (DK); Regler, Ralf, 5656 AG Eindhoven (NL); Bienert, Renke, 5656 AG Eindhoven (NL)
(74) Representative: Guardian IP Consulting I/S

(57) **Abstract**

A detection device for detecting the presence of an identification element within a detection area of the reader, the detection device defining at least a first a second and a third detection area each configured to receive one or more identification elements and the detection device being configured to detect which detection area an identification element is positioned in, wherein the detection device comprises a first sensor for detecting a presence of an identification element; wherein the first sensor is configured to detect a presence of an identification element in the first and third detection areas and the second sensor is configured to detect a presence of an identification element in the second and third detection areas.

## Description

### Field of the invention

The invention relates to a detection device and to a system comprising such a detection device.

### Background

Detection devices for communicating with RFID tags are used in a variety of applications. One example of applications for such detection devices are game systems in which a user operates a virtual character in a virtual environment. Such game systems have become increasingly popular among children and adult users. Various such game systems exist which may be implemented by a data processing system such as a game console, a handheld game device, a desktop computer, a portable computer, a tablet computer or mobile phone. It is generally desirable to make such systems increasingly interesting, entertaining and/or educational.

Several attempts have been made to control virtual game play by means of physical toys. For example, UK patent application GB 2365796 discloses a game system which comprises a toy which stores toy information, a reader for detecting the toy information by a contact-less data transmission system, and a game device. The game device executes a game in which a character representing the toy appears in accordance to the toy information detected by the reader.

In many game systems, a variety of virtual objects may become available to the player during game play, e.g. when virtual objects evolve to more advanced objects, when a player obtains virtual equipment, etc. Hence, during virtual game play, it is desirable to be able to represent different virtual objects by corresponding physical objects. It would thus be desirable to provide the user with a flexible mechanism that allows the user to obtain physical objects that resemble selected ones of a large number of different virtual objects.

Similarly, in many game systems or other applications, physical objects are employed that have stored thereon information which may be read by a reader when the physical object is within a detection area of the reader.

In particular, RFID tags have been found useful for many applications as a convenient identification and storage medium. In many applications it is desirable to read information from a memory included in such an object and to write information to the memory of the object. For example, in the context of a game system, a given tag may initially represent a first virtual object within a game. As the game progresses, it may be desirable to store data on the tag, such as information associating the tag to a different virtual object, information regarding progress in the game, and/or other game-related data.

It is generally desirable to provide a reader having multiple detection areas. It is also desirable to provide a detection device that is relatively inexpensive to produce.

### Summary

Disclosed herein are embodiments of a detection device - in the following also referred to as a reader - for detecting the presence of an identification element within a detection area of the reader, the reader defining at least a first a second and a third detection area each configured to receive one or more identification elements and the reader being configured to detect which detection area an identification element is positioned in, wherein the reader comprises a first sensor for detecting a presence of an identification element within a first detection range of the first sensor, and a second sensor for detecting a presence of an identification element within a second detection range of the second sensor, the second range overlapping the first detection range; wherein the first sensor is configured to detect a presence of an identification element in the first and third detection areas and the second sensor is configured to detect a presence of an identification element in the second and third detection areas. In particular the first sensor is configured to detect a presence of an identification element positioned within one of the first, second and third detection areas only if the identification element is positioned within the first or third detection areas. Similarly, the second sensor is configured to detect a presence of an identification element positioned within one of the first, second and third detection areas only if the identification element is positioned within the second or third detection areas.

Hence, from the sensor signals provided by the first and second sensors the reader can determine which one of the three detection areas a detected identification element is positioned in: If an identification element is detected by the first sensor but not by the second sensor, the identification element is positioned in the first detection area. Similarly, if an identification element is detected by the second sensor but not by the first sensor, the identification element is positioned in the second detection area. Finally, if an identification element is detected by the first sensor and by the second sensor, the identification element is positioned in the third detection area.

Hence, multiple detection areas may be provided with a limited number of sensors, thus reducing manufacturing costs and the number of components of the reader.

The detection device may use any suitable mechanism for detecting the presence of an identification element within a detection area. The detection mechanism may be a contact-less detection mechanism, e.g. based on capacitive detection, inductive detection, detection by a camera, detection based on radio-frequency signals, optical detection and/or another detection technology and/or a combination of two or more of the above or of other technologies. The size and/or shape of each detection area is normally defined by the detection technology employed and by the detection device implementing the detection technology. The detection device may be an integral part of a data processing system or a separate device connectable to the data processing system, e.g. a computer peripheral. For the purpose of the present description the detection device will also be referred to as a reader, as embodiments of the detection device may also perform the accessing of the information associated with the identification element. The detection device may comprise an antenna or other sensor for contact-less detection of the identification element. The detection area may thus be defined by the reception range of the antenna or a detection range of another contact-less sensor. The detection device may define a contact surface on which the identification element may be placed for the purpose of detection; in some embodiments, the detection device may be configured to only detect the identification element when it is positioned in contact with the contact surface and/or within a close proximity of the contact surface, e.g. within 10 cm or less from the surface, such as 5 cm or less, such as 1 cm or less. Said contact surface, or a part of the contact surface, may thus define the detection area. In other embodiments, the detection area may be larger than and/or remote from the detection device. For example, some contact-less detection technologies allow detection of an identification element within a detection area remote from the detection device, e.g. more than 10 cm away from the detection device, such as more than 1 m away from the detection device.

The detection technology may further allow the data processing system to access, via the detection device, information included in the identification element. Alternatively, the information access may use a separate technology; the information access technology may use e.g. a radio-frequency data communication, a wired data communication, an optical information access technology and/or the like. In some embodiments, the detection technology and/or the information access technology is a two-way technology allowing the data processing system to communicate information to the identification element, e.g. so as to alter, replace and/or supplement the information included in the identification element. In some embodiments, the detection and information access is based on near-field communication (NFC) or radio-frequency identification (RFID).

The reader may be operable for use in a game system as described herein and/or for use in a different type of game system or a different type of data processing system.

In some embodiments, the first sensor is configured to detect a presence of an identification element within a first detection range of the first sensor, and the second sensor is configured to detect a presence of an identification element within a second detection range of the second sensor, the second range overlapping the first detection range; wherein the first detection area is positioned within the first detection range and outside the second detection range; wherein the second detection area is positioned within the second detection range and outside the first detection range, and wherein the third detection area is positioned within the first detection arrange and the second detection range. The respective detection ranges may be defined by a signal strength of a received detection signal being below a predetermined threshold or by another suitable measure.

In some embodiments, the reader is configured to activate and/or interrogate only one of the first and second sensors at a time, e.g. by activating/interrogating the sensors in an alternating pattern or cycle, thus avoiding possible interference of the sensors with each other. This is particularly advantageous when the sensors are active sensors that are configured to emit an inquiry signal and detect receipt of a corresponding response signal.

For example, in some embodiments the identification elements may be passive identification elements that do not actively emit any identification signal but that emit a response signal in response to a received inquiry signal. An example of this type of sensors is a passive RFID tag that responds to the receipt of an interrogation signal from an antenna of an RFID reader by emitting an identification signal.

In some embodiments, a data processing system is operable, when an identification element is placed within one of the detection areas, to read and/or write information from/to the identification element e.g. an identifier identifying the identification element and/or payload data, such as sound data, image data, links or addresses to websites, data repositories in the cloud, and/or the like.

The, or each, identification element may be a physical object separate from the reader. In some embodiments, the identification element is a toy construction element comprising one or more connectors configured for mechanically connecting one or more other toy construction elements to the identification element so as to allow a user to construct a toy construction model. In some embodiments, at least one or more of the identification elements may be selectively positioned within the first and the second detection area, i.e. the at least one or more identification element and the first and second detection areas may be shaped and sized such that each identification element may be placed within each detection area. Hence, these identification elements may be read from and written to subject to placement of the identification element within one of the detection areas.

In some embodiments, the detection of an identification element is based on radio-frequency communication between the reader and the identification tag. To this end the first and second sensors may each comprise an antenna for emitting and/or receiving radio-frequency signals. In some embodiments, the identification elements are RFID tags such as passive RFID tags.

In some embodiments, each sensor further provides a position signal indicative of a position of the detected identification element relative to the sensor. For example, the position signal include distance information indicative of a distance between the detected identification element and the sensor, e.g. based on a signal strength of a detection signal, on a delay between an emitted interrogation signal and a received detection signal, a phase of the detected signal, a frequency of the detected signal and/or on another property of the sensor signal used for the detection of the identification element. The reader or the data processing system may then be operable to determine a position of a detected identification element at least in part based on the position signal from one, two or more sensors. In some embodiments, the detection device is configured to detect a position of the identification element relative to the detection device or relative to another suitable reference, e.g. the position within one of the detection areas. For example, a detection area may further define two or more zones and the detection device may be configured to determine which zone the identification element is positioned in. Alternatively or additionally, the detection device may be configured, e.g. based on the respective position signals, to determine a relative position of one identification element relative to another identification element and/or a relative distance from a centre of a detection area, and/or or a position relative to another suitable reference, e.g. a reference coordinate system.

In some embodiments, each sensor comprises a coil antenna. A detection area associated with the coil antenna may be defined within a contact surface which the identification element may be brought into contact with. In particular, the detection area may be defined such that it is positioned within an area delimited by a projection of the coil antenna onto the contact surface. For example, the first detection area may be located within a surface area of a contact surface surrounded by the projection of the coil antenna of the first sensor. Similarly, the second detection area may be located within a surface area of a contact surface surrounded by the projection of the coil antenna of the second sensor. The first and second detection areas may be located spaced apart from each other, and the third detection area may be defined within a contact surface such that the third detection area is positioned outside the area delimited by the projections of the coil antennas, e.g. adjacent both of the areas delimited by the respective projections of the coil antennas of the first and second sensors.

It will be appreciated that other embodiments may use a different number of sensors, e.g. 3, 4, or even more sensors so as to define multiple detection areas such that the number of distinguishable detection areas is larger than the number of sensors. For example, three sensors may be used to define 4, 5 or even 6 detection areas while four sensors may be used to defined 5, 6, 7, 8 or even 9 detection areas.

Multiple sensors may be used to define multiple detection areas within a single plane or to define multiple detection areas separated from each other in three dimensions, e.g. detection areas in two or more layers. In some embodiments, the reader is thus operable to determine a three-dimensional position of a detected identification area. As described above, this determination of a three-dimensional position may at least in part be based on a distance signal received from one or more of the sensors.

In some embodiments, the identification element is a toy construction element comprising one or more connectors configured for mechanically connecting one or more other toy construction elements to the identification element so as to allow a user to construct a toy construction model; and wherein the data processing system is configured to:
- detect a presence of the identification element within one of the detection areas;
- create an association between a virtual object in a virtual environment and the detected identification element; and/or access information stored in the memory of the detected identification element, present a representation of the associated virtual object based on the accessed information; and perform a play pattern procedure including controlling the representation of the virtual object.

Accordingly, a user may change the visual appearance of the physical toy construction model that is connected to the identification element by attaching one or more toy construction elements to the identification element. Consequently, the user may adapt the visual appearance of the toy construction model so as to make it more easily recognizable for the user which virtual object a given physical object corresponds to.

Moreover, a given identification element does not need to have any easily recognizable, specific appearance but may be provided as a generic element which the user may easily customize. This reduces manufacturing costs of the identification elements. Moreover, the game system can easily be maintained e.g. when new types of virtual objects are added, as existing identification elements may be reused.

Embodiments of the resulting system further provide an interesting game play, as the user may be provided with a high degree of freedom of designing the physical objects to be detected by the game system.

The toy construction elements may be toy construction elements of a toy construction system that comprises one or more different types of mutually interconnectable toy construction elements. The toy construction elements may be elements of an existing toy construction system. Hence, the user may reuse existing toy construction elements to construct physical objects which correspond to virtual objects in a virtual environment. Nevertheless, the game system may comprise a plurality of toy construction elements, each comprising one or more connectors configured for detachably interconnecting the toy construction elements with each other and/or with the identification element. For example, a toy construction set may comprise toy construction elements in a sufficient number, shape and size so as to allow a user to construct toy construction models that resemble one or more virtual objects of a game system.

In some embodiments, one or more of the toy construction elements have a top surface, a bottom surface, and connectors placed on at least one of the top and the bottom surface, so as to allow a vertical stacking of toy construction elements. Alternatively or additionally, toy construction elements may comprise connectors on one or more of its side faces so as to allow lateral/horizontal interconnection of toy construction elements. The toy construction elements may have a uniform height, or an integer multiple of a uniform height, defined between the top and bottom surfaces.

The connectors may be configured to allow interconnection of each construction element with another construction element in a discrete number of predetermined relative orientations relative to the construction element. Consequently, a large variety of possible building options are available while ensuring interconnectivity of the building elements. The connectors may be positioned on grid points of a regular grid; in particular, the connectors of the toy construction elements may be arranged such that the connectors of a set of mutually interconnected toy construction elements are positioned on grid points of a three-dimensional regular grid. The dimensions of the toy construction elements may be defined as integer multiples of a unit length defined by the regular grid. It will be understood that a three-dimensional grid may be defined by a single unit length, by two unit lengths, e.g. one unit length applicable in two spatial dimensions while the other unit length is applicable in the third spatial dimension. Yet alternatively, the three-dimensional grid may define three unit lengths, one for each spatial dimension.

The connectors may utilise any suitable mechanism for detachably connecting construction elements with other construction elements. In some embodiments, the connectors comprise two or more types of connectors configured for a mating engagement with each other, e.g. in a plug-and-socket or male-female fashion. Different surfaces of the toy construction element may comprise respective types of connectors. In some embodiments, the connectors comprise one or more protrusions and one or more cavities, each cavity being adapted to receive at least one of the protrusions in a frictional engagement.

Embodiments of the toy construction system allow a user to construct a large variety of toy construction models in a uniform and well-structured manner and with a limited set of different types of toy construction elements. In some embodiments, the game system comprises a plurality of toy construction elements and the virtual object resembles a toy construction model constructable from the plurality of toy construction elements. Consequently, the user may construct a toy construction model including the identification element such that the construction model resembles the virtual object it is associated with. The user may thus easily recognise which virtual object a physical toy construction model represents. It will be appreciated that the degree of resemblance may vary. For example, the representation of the virtual object presented by the data processing system may depict a construction model constructed from toy construction elements. In some embodiment the representation of the virtual object may depict a toy construction model constructed from the same construction elements as included in the game system for construction of the toy construction model, optionally with or without a representation of the identification element. In other embodiments the representation of the virtual model may depict a larger model constructed from a larger number of toy construction elements providing a more detailed or realistic shape of a given object. In yet other embodiments, the virtual representation may be depicted as an animated object without depicting individual toy construction elements.

In some embodiments, the detection device comprises a processor and/or other circuitry implementing the detection mechanism, and a communications interface with the identification element. The processor and/or other circuitry may further implement a communications interface with the data processing system. The detection device may comprise connectors for mechanically connecting the toy construction elements to the detection device so as to allow a user to construct a toy construction model which includes the detection device as an integral part, e.g. a model resembling a landscape, an arena, a portal or other structure associated with the virtual environment. Hence, placing a toy construction model with an identification element within the detection area of the detection device resembles placing the toy construction model within a landscape, arena etc.

The data processing system may be configured to create the association at least in part responsive to a game event, e.g. responsive to a user input such as a user input indicative of a selection of a virtual object. The game event may include an unlocking of a new virtual object, such as an evolved variant of a current virtual object or an entirely new type of virtual object. A game event may involve the game having reached a certain stage, a player having obtained a certain number of credits, in-game currency or other type of rewards, etc., a user selecting a new virtual object from a list of available virtual objects, and/or the like. In some embodiments the data processing system is configured, responsive to a game event, to replace an existing association between the identification element and a virtual object with a new association between a new virtual object and the identification element such that the data processing system presents a representation of said new virtual object and performs a play pattern procedure including controlling the representation of the new virtual object when the data processing system again detects the presence of the identification element within the first detection area. Consequently, a user may associate the identification element with successive virtual objects. The user may thus selectively construct different toy construction models using the identification element, each toy construction model having a respective virtual object associated with it. The information stored in the memory of an identification element may be indicative of the association. Hence, creating an association may comprise storing information indicative of the association in the memory of the detected identification element, e.g. by storing an identifier identifying an associated virtual object in the memory of the detected identification element.

The various aspects described herein may be implemented with a variety of computer-generated virtual environments in which virtual objects are controlled by a data processing system. Generally, a virtual object may be an animate or an inanimate object. The virtual object may be a completely autonomous object or an object whose actions are partly or completely responsive to user inputs. Examples of inanimate virtual objects include a building, a vehicle, a weapon or other accessory or equipment, etc. A virtual object may be stationary or movable within the virtual environment. For example, an object may be carried, worn or otherwise moved by a virtual character and/or controlled to be moved by the user, e.g. a car or other vehicle being controlled in a car racing game. A virtual object may comprise movable parts, such as doors, or the like and/or other modifiable parts.

A virtual object may represent a virtual character or other animate object, such as a human-like character, an animal-like character, a fantasy creature, etc. In some embodiments, virtual objects whose counterparts in the physical world are inanimate - e.g. a car - may be used as an animate virtual object or character in a virtual environment. Hence, in some embodiments the virtual object is a virtual character and, in some embodiments, the virtual object is an inanimate object.

A virtual character may exhibit behaviour by moving around within the virtual environment, by interacting with or generally engaging other virtual characters and/or inanimate virtual objects present in the virtual environment and/or the virtual environment itself and/or by otherwise developing within the virtual environment, e.g. growing, aging, developing or loosing capabilities, attributes or the like. Generally, virtual objects may have attributes, e.g. one or more capabilities, that influence the game play or other evolution of a virtual environment. For example, a car may have a certain maximum speed, or an object may have an attribute that determines whether or how a virtual character may interact with the virtual object, and/or the like.

Hence, a computer-generated virtual environment may be implemented by a computer program executed on a data processing system and causing the data processing system to generate a virtual environment and to simulate the evolution of the virtual environment over time, including the behaviour of one or more virtual characters and/or the attributes of one or more virtual objects within the virtual environment. A computer-generated virtual environment may be persistent, i.e. it may continue to evolve and exist even when no user interacts with it, e.g. between user sessions. In alternative embodiments, the virtual environment may only evolve as long as a user interacts with it, e.g. only during an active user session. A virtual object may be at least partly user-controlled, i.e. the data processing system may control the behaviour of a virtual object at least partly based on received user inputs. A computer-generated virtual environment may be a single-user environment or a multi-user environment. In a multi-user environment more than one user may interact with the virtual environment concurrently, e.g. by controlling respective virtual characters or other virtual objects in the virtual environment. Computer-generated virtual environments and, in particular, persistent, multi-user environments are sometimes also referred to as virtual worlds. Computer-generated virtual environments are frequently used in game systems, where a user may control one or more virtual characters within the virtual environment. A virtual character controlled by the user is sometimes also referred to as "the player." It will be appreciated that at least some embodiments of the aspects described herein may also be used in contexts other than game play. Examples of computer-generated virtual environments may include but are not limited to videogames, e.g. games of skill, adventure games, action games, real-time strategy games, role play games, simulation games, etc. or combinations thereof.

The game system may present a representation of the virtual environment including a representation of one or more virtual objects such as virtual characters within the virtual environment. The virtual environment and/or the virtual objects may be presented as two or three-dimensional graphical representations on a display of the data processing system. A user may access a computer-generated virtual environment so as to view the graphical presentation and/or so as to interact with the computer-generated virtual environment. In some embodiments, the virtual object is represented as a representation of a three-dimensional toy model composed from a number of interconnected toy construction elements. In some embodiments, the representation comprises a three-dimensional representation viewable using a 3D enabled device such as a 3D viewer.

The information associated with the identification element may include an identifier of the identification element. The data processing system may thus create an association to a virtual object by storing the identifier in association with an identifier of the virtual toy construction element. The data processing system may store this association in a storage device of the data processing system or otherwise accessible by the data processing system. The storage medium of or accessible by the data processing system may be a memory or storage device included in or connected to the data processing system. Alternatively or additionally, the data processing system may store an identifier of the virtual object in a memory of the identification element. The memory of the identification element may comprise any suitable storage medium, such as an EPROM, EEPROM, NVRAM, flash memory, etc., or another suitable type of memory or a combination of more than one memory types. The memory may be read-only or rewritable.

In some embodiments, the information associated with the identification element may include information about the virtual object such as an identifier of the virtual object, an attribute of the virtual object, and/or the like. The data processing system may thus create an association to a virtual object by storing the information about the virtual object in a memory of the identification element. For example, the memory of the identification element may include an identifier of a virtual object associated with the identification element.

A game system may comprise multiple identification elements and multiple toy construction elements which allow the user to construct multiple toy construction models for use in the game system.

In some embodiments, the identification element has the form of a base plate for supporting a toy construction model and for placement of the toy construction model within a detection area of the game system. The base plate may comprise one or more connectors on its upper surface allowing a user to position and connect one or more toy construction elements on top of the base plate. The base plate may include an electronic circuit including, e.g. including one or more of the following: a processor, and antenna, a memory, an RFID circuit, and/or the like.

The data processing system may comprise or be connectable to a computer-readable medium from which a computer program can be loaded into a processor, such as a CPU, for execution. The computer-readable medium may thus have stored thereon program code means adapted to cause, when executed on the data processing system, the data processing system to perform the steps of the method described herein. The data processing system may comprise a suitably programmed computer such as a portable computer, a tablet computer, a smartphone, a PDA, a game console, a game device, a smart TV, an Android stick, or another programmable computing device having a graphical user-interface. In some embodiments, the data processing system may include a client system, e.g. including a user interface, and a host system which may create and control the virtual environment. The client and the host system may be connected via a suitable communications network such as the internet.

Here and in the following, the term processor is intended to comprise any circuit and/or device suitably adapted to perform the functions described herein. In particular, the above term comprises general- or special-purpose programmable microprocessors, such as a central processing unit (CPU) of a computer or other data processing system, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

The present disclosure relates to different aspects including the game system and the device described above and in the following, corresponding apparatus, systems, methods, and/or products, each yielding one or more of the benefits and advantages described in connection with the first mentioned aspect, and each having one or more embodiments corresponding to the embodiments described in connection with the first mentioned aspect and/or disclosed in the appended claims.

In particular, according to one aspect, disclosed herein is a method for operating an electronic system such as a game system, the electronic system comprising a data processing system and an identification element comprising memory for storing information, wherein the data processing system comprises a detection device comprising a first and a second sensor and defining a first, a second and a third detection area; and wherein the method comprises:
- detecting a presence of an identification element within a first detection range of the first sensor and/or within a second detection range of the second sensor;
- responsive to the detected presence identifying a particular one of the detection areas as a detection area in which the identification element is positioned; and
- causing operation of one or more functions by the data processing system responsive at least to the identified detection area.

In some embodiments, the method further comprises receiving information stored in the memory of the identification element when the identification element is placed within one of the detection areas and/orstoring data in the memory of the identification element when the identification element is placed within one of the detection areas.

The present disclosure further relates to a computer program product comprising program code means adapted to cause, when executed on a data processing system, said data processing system to perform one, some or all of the steps of the method described herein that are perform by the data processing system. In particular, the detection and identification steps may be performed by the detection device while the data processing system is configured to receive information indicative of the identified detection area and to perform a function responsive to the detected detection area.

The computer program product may be provided as a computer-readable medium, such as a CD-ROM, DVD, optical disc, memory card, flash memory, magnetic storage device, floppy disk, hard disk, etc. In other embodiments, a computer program product may be provided as a downloadable software package, e.g. on a web server for download over the internet or other computer or communication network, or an application for download to a mobile device from an App store. Yet alternatively, the computer program may be executed by one or more remote host computers, e.g. executed directly via the internet or in the cloud, e.g. in the form of a flash game.

The present disclosure further relates to a toy construction set comprising a plurality of toy construction elements and one or more identification elements. The toy construction set may further comprise a storage medium having stored therein a computer program product as described herein and/or instructions to obtain or access a computer program product as described herein. For example, the instructions may be provide in the form of an internet address, a reference to an App store, or the like. Some embodiments of the toy construction set may further comprise a detection device e.g. a peripheral device connectable to a conventional computer via a wired or wireless interface such as via a USB interface, a Zigbee interface, a Wifi interface, a Bluetooth interface such a low-energy Bluetooth interface, and/or the like.

According to a further aspect, a system is disclosed which comprises a detection device of the kind set forth, and a data processing system configured to perform one or more functions at least in part responsive to which of the first, second and third detection areas an identification element has been detected in.

In some embodiments, the system is a game system. In particular, positions of game pieces or objects on a surface, for example a game board, may be detected by means of the detection device.

In some embodiments, the system is an access control system. In particular, the access to a certain function within a building control system or an industrial control system, or the access to a certain area within a building may not only be dependent on the verification of the identity of a person by reading a smart card, an RFID tag or an NFC tag (e.g. based on the simple action to bring said smart card or tag into proximity of a reader), but also on a choice made the user. This choice may be made by positioning the smart card or RFID/NFC tag on a predefined detection area. In that case, only if the user chooses this detection area, access may be granted. In order to enable this additional user authentication, it may be verified whether the predefined detection area corresponds to a detection area identified by the detection device of the kind set forth. It may also be envisaged that the user authentication is dependent on the selection of multiple positions by the user, in addition to the simple action of presenting the smart card or tag to the reader.

In some embodiments, the system is a service selection system. In particular, a multimedia screen may display a number of offered services, for example goods which may be ordered. In this case, the selection of a particular service may require the identification or authentication of a user. This identification or authentication may also be based on a user choice of the kind set forth, i.e. a user choice made by positioning a smart card or RFID/NFC tag on a predefined detection area. Then, only if the user chooses this detection area, the service will be selected. In order to enable this additional user authentication, it may be verified whether the predefined detection area corresponds to a detection area identified by the detection device of the kind set forth. It may also be envisaged that the user authentication is dependent on the selection of multiple positions by the user, in addition to the simple action of presenting the smart card or tag to the reader.

In some embodiments, the system is a smart card testing system or a tag testing system. Card or tag testing should in some case be done with a matrix of cards or tags, in order to parallelize programming and testing. Each card or tag needs to be addressed separately. Typically the number of antennas (and sometimes even reader devices) is equal to the number of cards or tags in the matrix. However, due to coupling effects normally only every second card or tag can be programmed and tested in parallel. Thus, after a first round of programming and testing a set of cards or tags, a second and third round to program and test the remaining cards is often required. By means of the detection device of the kind set forth, the number of antennas may be reduced, because multiple detection areas may be provided with a limited number of sensors or antennas.

### Brief description of the drawings

FIG. 1 illustrates an example of a game system.
FIGs. 2-5 illustrate examples of a detection device having multiple detection areas.
FIG. 6 illustrates another example of a detection device having multiple detection areas.
FIGs. 7-9 illustrate examples of prior art toy construction elements.

### Detailed description

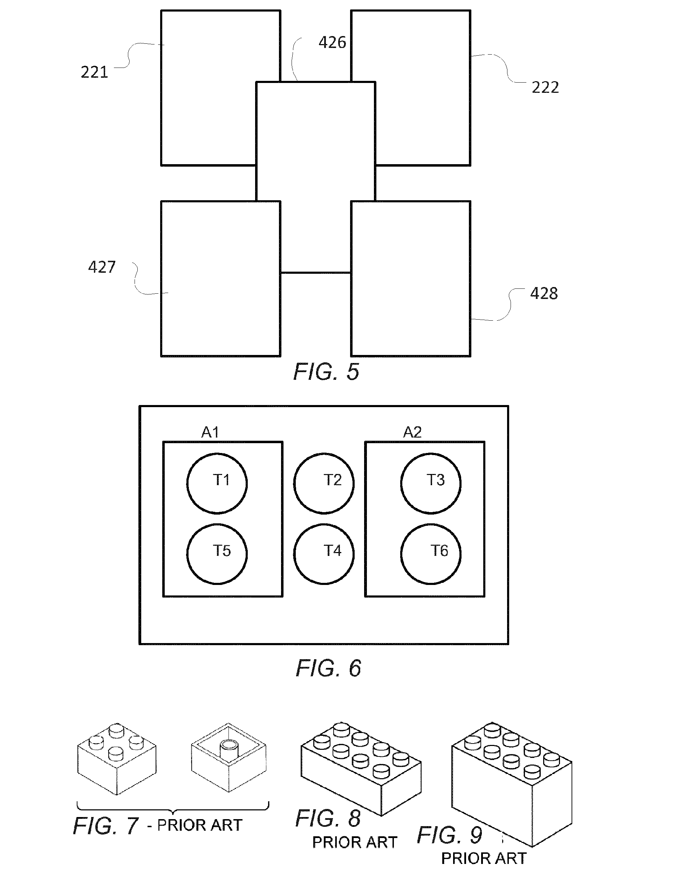

Various aspects and embodiments of game systems, detection devices and toy construction systems disclosed herein will now be described with reference to toy construction elements in the form of bricks, e.g. of the type shown in FIGs. 7 through 9. However, the various aspects disclosed herein may be applied to other forms of data processing systems and/or game systems and/or construction elements for use in toy construction sets.

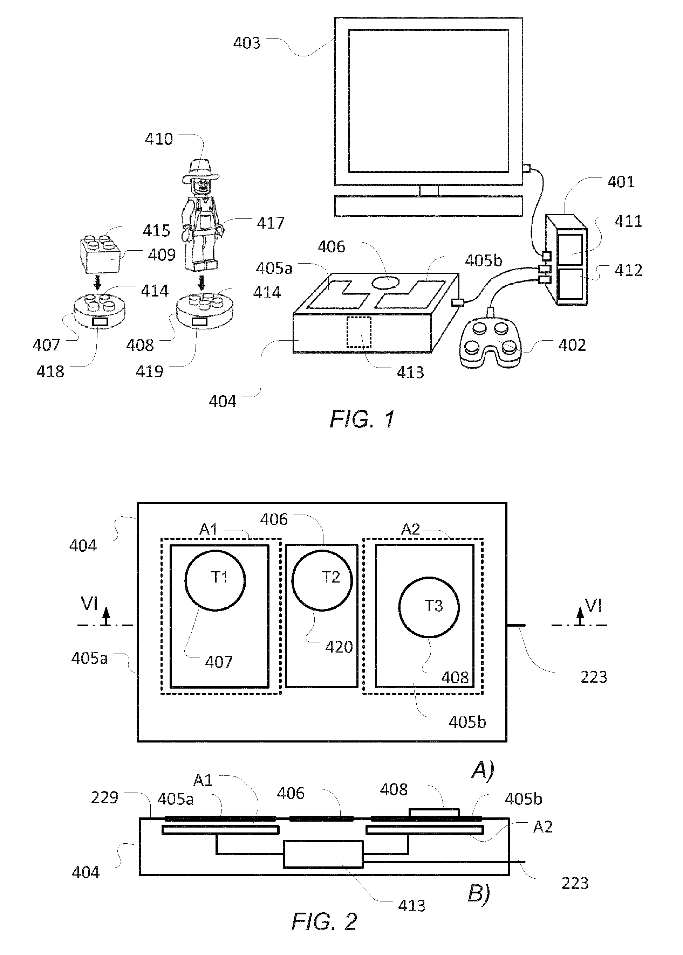

FIG. 1 shows an embodiment of a game system. The system comprises a computer 401, an input device 402 connected to the computer, a display 403 connected to the computer, a reader 404 connected to the computer, a number of identification elements 407, 408, and a number of toy construction elements 409, 410.

The computer 401 may be a personal computer, a desktop computer, a laptop computer, a handheld computer such as a tablet computer, a smartphone or the like, a game console, a handheld entertainment device, or any other suitably programmable computer. The computer 401 comprises a processor 411 such as a Central Processing Unit (CPU) and one or more storage devices 412 such as a memory, a hard disk, and/or the like.

The display 403 is operatively coupled to the computer 401 and the computer 401 is configured to present a graphical representation of a virtual environment on the display 403. Though illustrated as separate components in FIG. 1, it will be appreciated that the display may be integrated in the housing of the computer.

The input device 402 is operatively coupled to the computer 401 and is configured to receive user inputs. For example, the input device may comprise a keyboard, a mouse, or other pointing device, and/or the like. In some embodiments, the system comprises more than one input device. In some embodiments an input device may be integrated in the computer and/or the display, e.g. in the form of a touch screen. It will be appreciated that the system may comprise further peripheral computer devices operatively coupled to, such as integrated into, the computer.

The reader 404 is operable to detect one or more identification elements. To this end, the reader defines three detection areas 405a, 405b and 406, respectively, and the reader is operable to detect an identification element when positioned in one of the detection areas. The reader comprises a processing unit 413 including one or more RFID detection circuits and corresponding antennas each operable to detect an identification element placed on at least one of the detection areas. Alternatively, the reader may employ a different detection and data communication technology. In some embodiments the reader may be integrated in the computer and/or the display and/or the input device 402.

The identification elements 407 and 408 have the form of a base plate with connectors 414 on its top surface. The connectors 414 are compatible with the known construction elements described in connection with FIGs. 7-9. However, other types of identification elements may be used. The game system further comprises one or more toy construction elements 409 and 410, e.g. of the type described in connection with FIGs. 7-9. While FIG. 1 shows two construction elements, it will be appreciated that a game system may include any number of construction elements. One of the construction elements 409 has the shape of a building block as described in connection with FIG. 7, and another construction element 410 has the shape of a human figure. Both construction elements have connectors - in this example cavities - for attachment to the connectors of the identification elements. Both construction elements have additional connectors 415, 417 allowing a user to connect further construction elements so as to construct a toy construction model comprising multiple construction elements. Each of the identification elements comprises an RFID circuit 418, 419, respectively, operable to receive and store information. If another detection technology is used, the identification element may comprise a corresponding detection circuit or device. In particular, the stored information may identify a virtual object associated with the identification toy construction element. In some embodiments, one or more of the identification elements included in a game system may be manufactured with pre-stored information indicative of a predetermined virtual object. Alternatively or additionally, one or more identification elements may be manufactured without pre-stored information about any specific virtual object.

The display 403, the reader 404 and the input device 402 may be operationally coupled to the computer in a variety of ways. For example one or more of the above devices may be coupled to the computer via a suitable wired or wireless input interface of the computer 401, e.g. via a serial or parallel port of the computer such as a USB port, via Bluetooth, Wifi or another suitable wireless communications interface. Alternative, one or all of the devices may be integrated into the computer. For example, the computer may comprise an integrated display and/or input device and/or an integrated detection device. In particular, many tablet computers and smartphones comprise an integrated touch screen operable as a display and input device.

The computer 401 has stored thereon a program, e.g. an App or other software application, adapted to simulate a virtual environment and to create and control virtual objects as described herein.

It will be appreciated that, in some embodiments, the computer 401 may be communicatively connected to a host system, e.g. via the Internet or another suitable computer network. At least a part of the processing described herein may then be performed by the host system. For example, in some embodiments, a host system may generate and simulate a virtual environment, such as a virtual world which may be accessible by multiple users from respective client computers. A user may use a client computer executing a suitable program to detect identification elements and cause the client or the host system to create a corresponding virtual object. The host system may then add the virtual object to the virtual world and control the virtual object within the virtual world.

The user may construct respective toy construction models on top of each of the identification elements which each have the form of a base plate. In use, when the user places an identification element, e.g. with a toy construction model connected to it, on the detection area 405a or 405b of the reader, the reader detects the presence of the identification element and accesses the information stored in it, if any. The accessed information comprises information about which virtual object the identification element is associated with or the accessed information allows the computer to otherwise identify the associated virtual object. Responsive to the detection of the identification element in detection area 405a or 405b, the computer thus creates or otherwise presents a representation of the associated virtual object in a virtual environment. In particular, the computer may create a representation of the associated virtual object on the display and/or allow the user to control or otherwise use or engage the created virtual object in the virtual environment.

When the user positions an identification element, e.g. with a toy construction model connected to it, within the detection area 406 of the reader, the reader detects the presence of the identification element and allows the user to store information about a virtual object on the identification element. Hence, when the user subsequently positions the identification element on the detection area 405a or 405b, the computer creates or enables the corresponding virtual object as described above. Generally, the detection area 406 may be shaped and/or sized so as to allow a user to only position a single identification element on the detection area 406 so as to allow writing to only a single identification element at a time. It will be appreciated that detection areas 405a and 405b may be shaped and sized so as to allow detection of more than one identification element at a time.

Generally each of the detection areas may be implemented as read-write areas, as read-only areas or as write-only areas. For example, the provision of two read-only detection areas 405a, b facilitates two-player games or other types of games where two classes of virtual objects are to be distinguished, e.g. objects belonging to two different players, to two different teams, etc. The physical separation of the two detection areas thus provides an easy-to-use mechanism for a user to define members of the two classes of virtual objects by simply placing the corresponding identification element on a selected one of the detection areas 405a, b, where each detection area is associated with one of the classes. It will be appreciated that other embodiments may comprise additional detection areas, e.g. to define more than two classes of objects. It will further be appreciated that an identification of which of the detection areas an identification element is placed may be used to trigger other functions of the system that may at least in part depend on which detection area an identification is placed on.

FIG. 2 shows schematic views of a reader for detecting identification elements and for reading and writing information from/to detected identification elements. In particular, Fig. 2A shows a top view of the reader while Fig. 2B shows a cross sectional view along line VI. The reader 404 comprises a processing unit 413, a first antenna A1 and a second antenna A2, each antenna coupled to the processing unit 413. The processing unit 413 comprises and RFID detection circuit coupled to the antennas A1 and A2. The RFID detection circuit is configured to detect whether an identification element in the form of an RFID tag is positioned within a detection range of antenna A1 and/or antenna A2. Alternatively, the processing unit 413 may comprise separate RFID detection circuits for each of the antennas. The processing unit 413 is further configured to read information from a detected identification tag and to forward the read information via data interface 223 to a data processor, such as computer of other data processing system. The processing unit 413 is further configured to receive information from a data processor via data interface 223 and to write the received information to a detected identification tag.

Antenna A1 is formed as an antenna coil located below and parallel to a contact surface 229 defined by the reader; in this example the contact surface is a top surface of the reader onto which tags T1-T3 may be placed. A first detection area 405a is defined within the contact surface of the reader so that the coil antenna A1 encircles the first detection area such that the magnetic flux through the first detection area is surrounded by the coil A1. Similarly, antenna A2 is formed as an antenna coil located below and parallel to a contact surface 229 defined by the reader, and a second detection area 405b is defined within the contact surface of the reader so that the coil antenna A2 encircles the second detection area such that the magnetic flux through the second detection area is surrounded by the coil A2.

A third detection area 406 is defined within the contact surface 429 such that the detection areas do not overlap and such that the third detection area does not overlap any of the two antenna coils but is positioned between the antenna coils such that magnetic flux through the third detection area continues outside of the antenna coils

The detection areas may be delimited from the remainder of the contact surface, e.g. by a different color, a boundary, as an elevated surface portion or as a recessed surface portion, or in another easily recognizable manner.

In the example of FIG. 2, three tags T1-T3, respectively, are placed on the contact surface of reader 440. Tag T1 is placed within the first detection area 405a, tag T2 is placed within the third detection area 406, while tag T3 is placed within the second detection area 405b. Hence, antenna A1 is operable to detect and read tag T1 and tag T2; antenna A1 uses the inner flux of its magnetic field for the detection of tag T1 and the outside flux of the magnetic field for the detection of tag T2. Similarly, antenna A2 is operable to read tags T2 and tag T3, using the outside and inner flux of its magnetic field respectively.

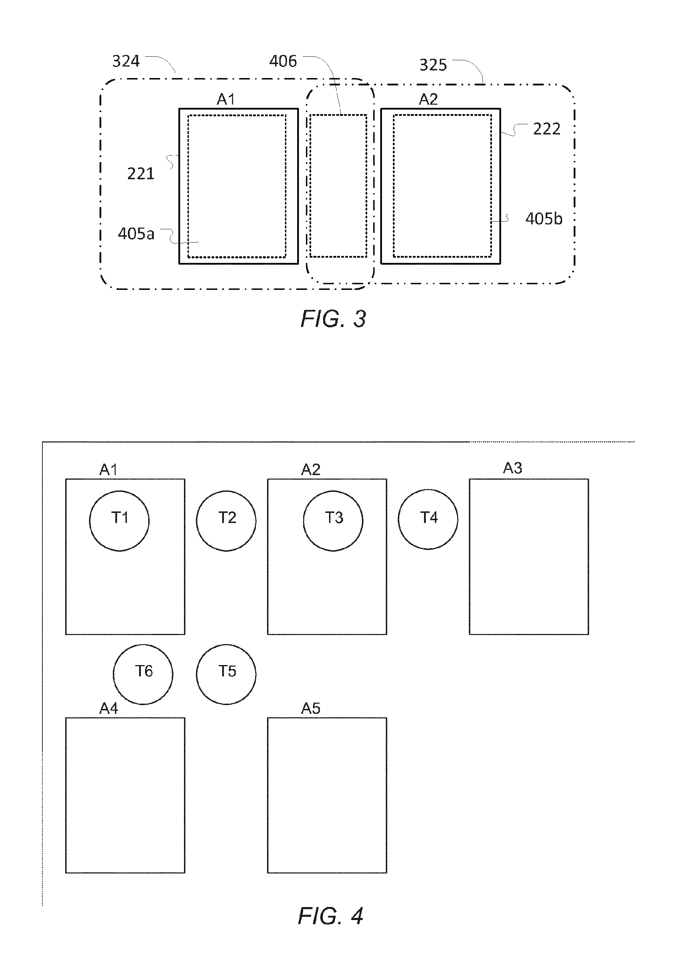

Figure 3 schematically illustrates an example of how the antennas and detection areas may be arranged relatively to another. The antennas A1 and A2 and the detection areas 405a, b and 406 are shaped, sized, positioned and configured such that antenna A1 is operable to detect tags on or in close proximity to the contact surface within a first detection range 324 while antenna A2 is operable to detect tags on or in close proximity to the contact surface within a second detection range 325, as schematically illustrated by dashed dotted lines in Fig. 3. Antenna A1 is located at a distance from antenna A2 such that the first detection area 405a lies outside the detection range 325 of antenna A2 and such that the second detection area 405b lies outside the detection range 324 of antenna A1. The detection ranges 324 and 325 partially overlap each other such that they define an area of overlap covered by both detection ranges as well as separate areas covered only by one of the detection ranges. The third detection area 406 is positioned such that it lies within the area of overlap i.e. within the detection range of both antennas.

Generally, each antenna may emit an interrogation signal causing a tag within its detection range to respond with a response signal. In some embodiments, the interrogation signal may further provide operating power to the tag(s) within the detection range of the antenna, e.g. as in the case of detecting passive tags such as passive RFID tags. In some embodiments, a multiplexing scheme is employed where the antennas A1 and A2 are activated alternatingly. To this end, while antenna A1 is used for reading tags, antenna A2 is short-circuited electrically so that it does not mirror any tag (e.g. tag T3 in FIG. 2) and so that it does not work as a repeater for the interrogation signal of antenna A1. Similarly antenna A1 may thus be short-circuited while antenna A2 is active. Hence, the antennas may be alternatingly active in respective time windows of an activation cycle.

The position of the detected tags may thus be determined by the processing unit (or by an external processor) using the detection signals of the two antennas A1 and A2:

If only antenna A1 detects a tag T1 - e.g. as identified by the detected tag's tag identifier received from the tag, e.g. in response to an interrogation signal - the processing unit determines that the tag is positioned within the first detection area 405a. If only antenna A2 detects a tag T3, the processing unit determines that the tag is positioned within the second detection area 405b. If both antennas detect a tag T2 (within different, e.g. consecutive time windows), the processing unit determines that the tag is positioned within the third detection area 406.

In some embodiments, the processing unit 413 may be configured to read information from an identification element only if the identification tag is detected in one or a subset of the detection areas, e.g. detection areas 405a and 405b. In other embodiments, the processing unit 413 may be configured to read information from an identification element regardless of which detection area the identification tag is detected in.

In some embodiments, the reader may be configured to store data in the memory of a detected tag. During the writing process, only one of the antennas is active. In some embodiments, the processing unit 413 may be configured to write information to an identification element only if the identification tag is detected in one or a subset of the detection areas, e.g. only detection area 406, thus implementing one or more read-only and/or one or more write-only detection areas. In some embodiments, the selective reading and/or writing of information to identification elements conditioned on which detection area the identification element has been detected in may be enforced by the external data processor. To this end, the reader may communicate to the data processor via data interface 223 which detection area is occupied by an identification element.

It will be appreciated that other embodiments of a reader may comprise more than two antennas so as to be able to distinguish more than three detection areas. As in the previous example, the antennas may be activated one-by-one in a cyclic pattern as described above for the case of two antennas.

FIG. 4 illustrates a reader having 5 antennas A1-A5, respectively. As in the previous example, the antennas are coil antennas which are arranged in a regular pattern, but it will be appreciated that other geometries may be used. Fig. 4 further illustrates tags T1-T6 positioned at different locations relative to the antennas such that their respective positioned may be detected from the respective antenna signals.

It will be appreciated that other examples of readers may comprise different numbers and/or different geometrical arrangements and/or different types of antennas.

In one embodiment the cyclic activation may be as follows: While antenna A1 is used for reading tags, antennas A2, A3, A4 and A5 are short-circuited electrically so that they do not mirror any tag and so that none of them works as a repeater for the signal made on A1. In the next cycle, antenna A2 is used for reading tags while antennas A1, A3, A4 and A5 are short-circuited electrically so that they do not mirror any tag and so that none of them works as a repeater for the signal made on A2, etc.

In the example of FIG. 4, the position of tag T6 may thus be determined when only antennas A1 and A4 detect the presence of tag T6. Similarly, the position of T5 may be determined when T5 is detected by antennas A1, A2, A4 and A5.

Hence, by multiplexing all antennas all tags and their respective positions may be determined.

It will be appreciated that the above principle may also be applied to readers where the antennas are not all located in the same plane but in a three-dimensional arrangement, e.g. in multiple layers, such as in the example of FIG. 5, where antennas 221 and 222 are positioned in a bottom layer, antenna 426 in an intermediate layer, and antennas 427 and 428 in a top layer. Hence, a reader where multiple antennas, e.g. 3 or more antennas are arranged in a three-dimensional pattern, a three-dimensional position of a detected tag may be determined. In the example of FIG. 5, the antenna layers are distributed across the reader with a fixed or variable distance and/or electrical coupling between the layers. The antennas do not have to have the same size and/or distance towards each other.

It will further be appreciated that, in the above examples, the spatial resolution of the positioning may be increased, if additional information - in addition to the presence or absence of a detected signal for each of the antennas - is used, such as a measured signal strength of the detection signal. Such further information may be employed to perform a triangulation or other geometric scheme so as to obtain more accurate 2D or 3D positioning where the signal strength may be used as a measure of the distance of a detected tag from the corresponding antenna.

In the example of Fig. 5, a cyclic scanning routine as described in the above examples may be performed in each layer, one layer at a time. For example, initially the antennas of the bottom layer may be activated one by one. After cycling through the bottom layer, the process proceeds with the intermediate layer and, subsequently, to the top layer and so forth. Alternatively, other cyclic schemes may be employed for activating the individual antennas one-by-one. After collecting data from a complete scan through all layers, all tags are identified and positioned within the grid. This also allows for triangulating of each tag.

FIG. 6 schematically illustrates an example of a reader. In particular, the example of FIG. 6 illustrates that one or more of the detection areas may be shaped and sized so as to allow more than one tags to be positioned within them at the same time. The detection of the individual tags may still be performed as described in connection with the previous examples. For example, in the example of FIG. 6, antenna A1 is used for reading tags T1, T2, T4 and T5, etc.

This functionality can also be applied on multiple spots, e.g. as in Fig. 4 with multiple antennas except and, in a modified form, in a 3D arrangement, e.g. as in FIG. 5.

In FIG. 7 is shown a toy construction element with coupling studs on its top surface and a cavity extending into the brick from the bottom. The cavity has a central tube, and coupling studs on another brick can be received in the cavity in a frictional engagement as disclosed in US 3 005 282. FIGs. 8 and 9 show other such prior art construction elements. The construction elements shown in the preceding figures have this known type of connectors in the form of cooperating studs and cavities. However, other types of connectors may also be used in addition to or instead of the studs and cavities. The coupling studs are arranged in a square planar grid, i.e. defining orthogonal directions along which sequences of coupling studs are arranged. The distance between neighbouring coupling studs is uniform and equal in both directions. This or similar arrangements of connectors at coupling locations defining a regular planar grid allow the toy construction elements to be interconnected in a discrete number of positions and orientations relative two each other, in particular at right angles with respect to each other.

Embodiments of the method described herein can be implemented by means of hardware comprising several distinct elements, and/or at least in part by means of a suitably programmed microprocessor.

In the claims enumerating several means, several of these means can be embodied by one and the same element, component or item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components or groups thereof.

## Claims

1. A detection device for detecting the presence of an identification element within a detection area of the reader, the detection device defining at least a first a second and a third detection area each configured to receive one or more identification elements and the detection device being configured to detect which detection area an identification element is positioned in, wherein the detection device comprises a first sensor for detecting a presence of an identification element; wherein the first sensor is configured to detect a presence of an identification element in the first and third detection areas and the second sensor is configured to detect a presence of an identification element in the second and third detection areas.

2. A detection device according to claim 1; wherein the first sensor is configured to detect a presence of an identification element positioned within one of the first, second and third detection areas only if the identification element is positioned within the first or third detection areas.

3. A detection device according to claim 1 or 2; wherein the first sensor is configured to detect a presence of an identification element within a first detection range of the first sensor, and the second sensor is configured to detect a presence of an identification element within a second detection range of the second sensor, the second range overlapping the first detection range; wherein the first detection area is positioned within the first detection range and outside the second detection range; wherein the second detection area is positioned within the second detection range and outside the first detection range, and wherein the third detection area is positioned within the first detection range and the second detection range.

4. A detection device according to any one of claims 1 through 3; configured to selectively activate and/or interrogate the first and second sensors in an alternating pattern.

5. A detection device according to any one of claims 1 through 4; wherein each sensor further provides a position signal indicative of a position of a detected identification element relative to the sensor; and wherein the detection device is operable to determine a position of a detected identification element at least in part based on the respective position signals from one or more sensors.

6. A detection device according to any one of claims 1 through 5; operable to detect a three-dimensional position of a detected identification element.

7. A detection device according to any one of claims 1 through 6; further configured to read information from a memory of the identification element and/or to write information to the memory of the identification element, when the identification element is detected in one of the detection areas.

8. A system comprising a detection device according to any one of claims 1 through 7, and a data processing system configured to perform one or more functions at least in part responsive to which of the first, second and third detection areas an identification element has been detected in..

9. A computer-implemented method executed by a data processing system, the method comprising:
- receiving a signal indicative of a placement of an identification element in a particular one of the first, second and third detection areas of a detection device as defined in any one of claims 1 through 7; and
- performing one or more functions responsive at least to the received signal.

10. A computer program product comprising program code means adapted to cause, when executed on a data processing system, said data processing system to perform the steps of the method defined in claim 9.

11. A system according to claim 8, being a game system.

12. A system according to claim 8, being an access control system.

13. A system according to claim 8, being a service selection system.

14. A system according to claim 8, being a smart card testing system or a tag testing system.
